# EUROPEAN PATENT APPLICATION

(11) **EP 2 000 366 A2**
(43) Date of publication of application: **10.12.2008**
(21) Application number: 07739034.2
(22) Date of filing: 13.03.2007
(51) Int. Cl.: B60R 16/03, B60K 6/04, B60L 1/02, B60L 11/14, B60R 16/02, B60W 10/30, B60W 20/00

(54) **CONTROL DEVICE FOR VEHICLE, AND VEHICLE**

(30) Priority: 17.03.2006 JP 2006074498
(71) Applicant: Toyota Jidosha Kabushiki Kaisha, Toyota-shi, Aichi 471-8571 (JP)
(72) Inventor: KAWAI, Takashi, Toyota-shi, Aichi 471-8571 (JP)
(74) Representative: TBK-Patent
(86) International application number: PCT/JP2007/055591
(87) International publication number: WO 2007/108454

(57) **Abstract**

A vehicle (1) includes a high-voltage battery (B), a socket (16) for connection of a charging cable of an external power supply apparatus for charging the high-voltage battery (B), and a load for cooling and heating and a load for warming-up an engine that serve as in-vehicle loads receiving electric power from the high-voltage battery (B) or an auxiliary machinery battery and controlled by a control device (30). The control device (30) drives the in-vehicle electric load in response to disconnection of the charging cable from the socket (16). Preferably, the control device (30) stops the in-vehicle electric load that has been driven when a prescribed stop condition is satisfied.

## Description

### Technical Field

The present invention relates to a control device of a vehicle and a vehicle, and more particularly to a vehicle to which a charging cable is externally connected.

### Background Art

After a vehicle is parked for a long time, a temperature in a vehicle room is high due to solar radiation or it is low during winter, and it is frequently experienced that an air-conditioning apparatus is actuated quickly when a driver gets into the vehicle.

As to control of an air-conditioning apparatus for a vehicle, Japanese Patent Laying-Open No. 2004-26139 discloses a technique to start preliminary air-conditioning of a vehicle room before a driver gets into the vehicle (also referred to as pre-air-conditioning) when the vehicle receives a signal indicating that a driver is about to get in the vehicle.

By thus performing preliminary air-conditioning, user comfortability is improved even under the scorching sun or during the extremely cold weather. On the other hand, in a case where a user should start the engine before getting into the car, for example, by operating a switch on a remote controller in advance, user's burden of operation or forgetting of the operation is likely. In addition, in a normal vehicle, as the engine is started when air-conditioning is actuated, performance in terms of fuel efficiency or exhaust emission is also deteriorated.

Moreover, if a signal indicating that a driver gets in the vehicle arrives too late, an effect of preliminary air-conditioning is not basically achieved. For example, when a door unlock signal is used, a driver may get in the car before the vehicle is sufficiently air-conditioned. In contrast, if a signal indicating that a driver gets in the vehicle arrives too early, air-conditioning is performed also for an extra period of time and power consumption is great. Thus, how to set timing to start air-conditioning relative to timing when the driver gets in the vehicle has been an issue.

Meanwhile, in recent years, a vehicle incorporating a power storage apparatus, such as a hybrid vehicle, an electric vehicle and a fuel cell vehicle, has attracted attention as an environment-friendly vehicle. Study on such a power storage apparatus configured to be externally chargeable has been conducted.

### Disclosure of the Invention

An object of the present invention is to provide a control device of a vehicle allowing preparation for operation of a vehicle at appropriate timing in a case of an externally chargeable vehicle, and a vehicle.

In summary, the present invention is directed to a control device of a vehicle, and the vehicle includes a power storage apparatus, a charge port for connection of a charging cable of an external power supply apparatus for charging the power storage apparatus, and an in-vehicle electric load controlled by the control device. The control device includes a drive start determination portion driving the in-vehicle electric load in response to disconnection of the charging cable from the charge port.

Preferably, the in-vehicle electric load includes an air-conditioning apparatus. The control device causes the air-conditioning apparatus to perform preliminary air-conditioning before a driver gets in the vehicle in response to disconnection of the charging cable from the charge port.

Preferably, the vehicle is a hybrid vehicle in which an internal combustion engine and a motor are used for driving wheels. The in-vehicle electric load includes a load for warming up the internal combustion engine. The control device causes the load for warming-up to perform warm-up before a driver gets in the vehicle in response to disconnection of the charging cable from the charge port.

Preferably, the control device further includes a stop determination portion stopping the in-vehicle electric load that has been driven when a prescribed stop condition is satisfied.

More preferably, the prescribed stop condition includes connection again of the charging cable to the charge port after the in-vehicle electric load was driven.

More preferably, the prescribed stop condition includes lapse of a prescribed time since the in-vehicle electric load was driven.

More preferably, the prescribed stop condition includes a condition that the vehicle has attained a target state as a result of actuation of the in-vehicle electric load after the in-vehicle electric load was driven.

Preferably, the control device further includes a prohibition determination portion prohibiting drive of the in-vehicle electric load in response to a prescribed prohibition condition being satisfied.

More preferably, the prescribed prohibition condition includes an input to designate prohibition of preliminary drive of the in-vehicle electric load from a manipulation portion.

More preferably, the prescribed prohibition condition includes a charged state of the power storage apparatus being lower than a prescribed value.

More preferably, the prescribed prohibition condition includes detection of abnormality in a result of failure diagnosis.

Preferably, the control device further includes a display portion provided around the charge port, for indicating drive of a vehicle load in response to disconnection of the charging cable.

Preferably, the control device further includes a manipulation portion provided around the charge port, for giving an instruction to prohibit drive of a vehicle load in response to disconnection of the charging cable.

According to another aspect, the present invention is directed to a vehicle including any control device of a vehicle described above.

According to the present invention, in an externally chargeable vehicle, preparation for operating a vehicle can be made at appropriate timing, without user's particular consciousness.

### Brief Description of the Drawings

Fig. 1 is a block diagram showing a configuration of a hybrid vehicle 1 according to an embodiment of the present invention.
Fig. 2 is a block diagram showing in further detail a power supply system of vehicle 1 shown in Fig. 1.
Fig. 3 is a block diagram showing a configuration of a control device 30 in Figs. 1 and 2.
Fig. 4 illustrates an example of inside of a charge port for connection of a charging cable to the vehicle.
Fig. 5 is a flowchart for illustrating control of start of actuation of air-conditioning by control device 30.
Fig. 6 is a flowchart illustrating control for stopping preliminary air-conditioning after preliminary air-conditioning was started.

### Best Modes for Carrying Out the Invention

An embodiment of the present invention will be described hereinafter in detail with reference to the drawings. In the drawings, the same or corresponding elements have the same reference characters allotted, and description thereof will not be repeated.

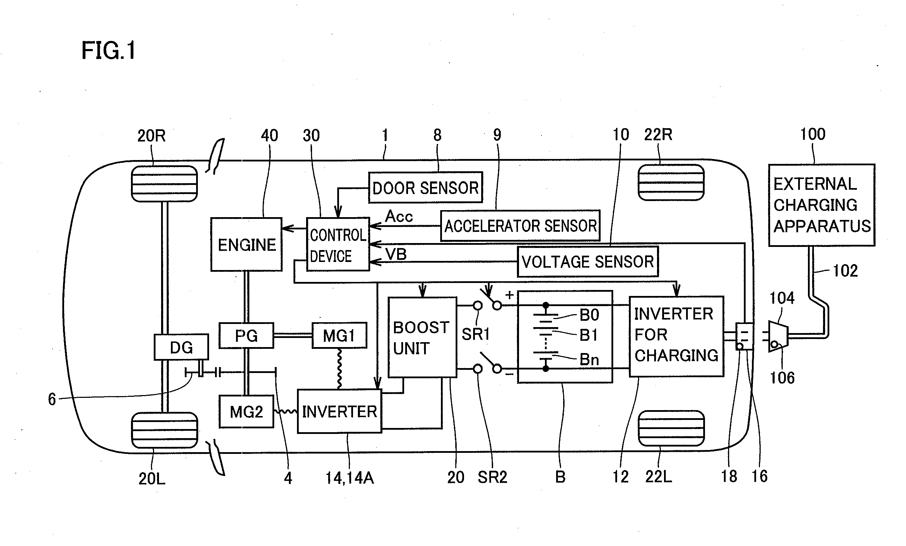

Fig. 1 is a block diagram showing a configuration of a hybrid vehicle 1 according to an embodiment of the present invention.

Referring to Fig. 1, hybrid vehicle 1 includes front wheels 20R, 20L, rear wheels 22R, 22L, an engine 40, a planetary gear PG, a differential gear DG, and gears 4, 6.

Hybrid vehicle 1 further includes a battery B, a boost unit 20 boosting DC power output from battery B, and inverters 14, 14A receiving/supplying DC power from/to boost unit 20.

Hybrid vehicle 1 further includes a motor-generator MG1 generating electric power by receiving motive power of engine 40 via planetary gear PG and a motor-generator MG2 of which rotation shaft is connected to planetary gear PG. Inverters 14, 14A are connected to motor-generators MG1, MG2, and perform conversion between AC power and DC power from a boost circuit.

Planetary gear PG includes a sun gear, a ring gear, a pinion gear engaged with both of the sun gear and the ring gear, and a planetary carrier supporting the pinion gear such that the pinion gear is rotatable around the sun gear. Planetary gear PG has first to third rotation shafts. The first rotation shaft is a rotation shaft of the planetary carrier connected to engine 40. The second rotation shaft is a rotation shaft of the sun gear connected to motor-generator MG1. The third rotation shaft is a rotation shaft of the ring gear connected to motor-generator MG2.

Gear 4 is attached to the third rotation shaft, and gear 4 transmits mechanical motive power to differential gear DG by driving gear 6. Differential gear DG transmits mechanical motive power received from gear 6 to front wheels 20R, 20L, and transmits rotational force of front wheels 20R, 20L to the third rotation shaft of planetary gear PG via gears 6; 4.

Planetary gear PG plays a role to split motive power between engine 40 and motor-generators MG1, MG2. Namely, based on rotation of two rotation shafts out of the three rotation shafts, planetary gear PG determines rotation of one remaining rotation shaft. Therefore, by driving motor-generator MG2 by controlling an amount of power generated by motor-generator MG1 while operating engine 40 in a most efficient region, a vehicle speed is controlled and a vehicle excellent in energy efficiency as a whole is implemented.

Battery B representing a DC power supply is implemented, for example, by a secondary battery such as a nickel metal hydride battery and a lithium ion battery, and battery B supplies DC power to boost unit 20 and it is charged with DC power from boost unit 20.

Boost unit 20 boosts a DC voltage received from battery B and supplies the boosted DC voltage to inverters 14, 14A. Inverter 14 converts the supplied DC voltage to an AC voltage and drives and controls motor-generator MG1 when the engine is started. After the engine is started, inverter 14 converts the AC power generated by motor-generator MG1 to DC, which is in turn converted to a voltage appropriate for charging of battery B by boost unit 20, whereby battery B is charged.

Meanwhile, inverter 14A drives motor-generator MG2. Motor-generator MG2 assists engine 40 in driving front wheels 20R, 20L. During braking, motor-generator MG2 performs regenerative operation and converts rotation energy of the wheels to electric energy. The obtained electric energy is returned to battery B via inverter 14A and boost unit 20.

Battery B is implemented by a battery assembly and includes a plurality of battery units B0 to Bn connected in series. System main relays SR1, SR2 are provided between boost unit 20 and battery B and a high voltage is blocked while the vehicle is not operating.

Hybrid vehicle 1 further includes an accelerator sensor 9 serving as an input portion receiving a request and instruction for acceleration from a driver and sensing a position of an accelerator pedal, a voltage sensor 10 attached to battery B, and a control device 30 controlling engine 40, inverters 14, 14A, and boost unit 20 in accordance with an accelerator position Acc from accelerator sensor 9 and a voltage VB from voltage sensor 10. Voltage sensor 10 senses voltage VB of battery B and transmits the voltage to control device 30.

Hybrid vehicle 1 further includes a socket 16 for connection of a plug 104 provided at the end of a charging cable 102 that extends from an external charging apparatus, a coupling confirmation sensor 18 provided in socket 16, for sensing a coupling confirmation element 106 of plug 104 and recognizing connection of plug 104 to socket 16, and an inverter for charging 12 that receives AC power from external charging apparatus 100 via socket 16. Inverter for charging 12 is connected to battery B and supplies DC power for charging to battery B. Here, coupling confirmation sensor 18 of any type may be adopted, and for example, a sensor sensing a magnet on a plug side, a sensor of a push button type that is pressed down when the plug is inserted, a sensor sensing connection resistance of a current path, and the like may be employed.

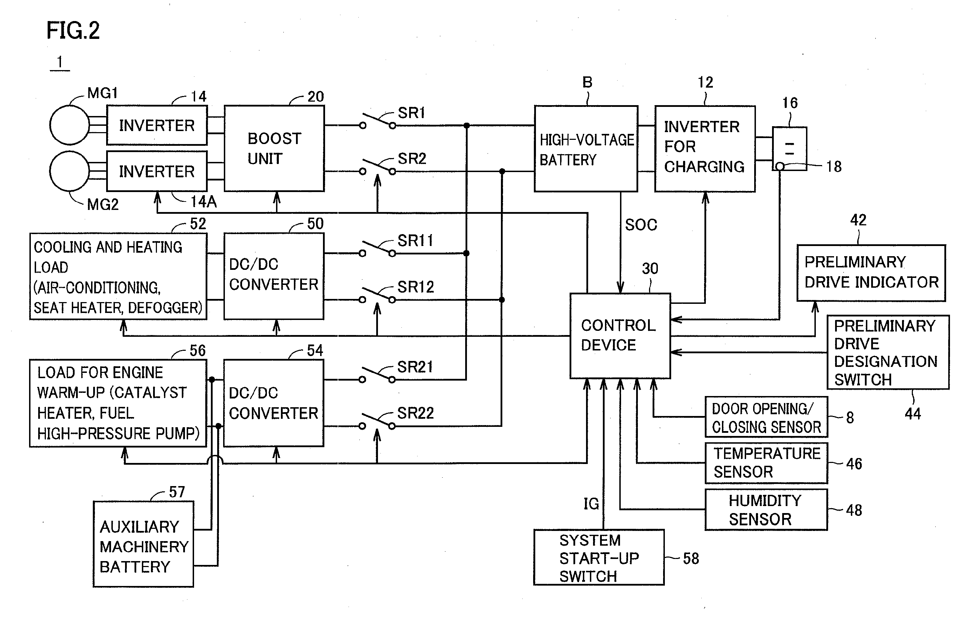

Fig. 2 is a block diagram showing in further detail a power supply system of vehicle 1 shown in Fig. 1.

Referring to Fig. 2, vehicle 1 includes high-voltage battery B serving as a power storage apparatus and socket 16 for connection of the charging cable of the external charging apparatus for charging high-voltage battery B. Inverter for charging 12 converting AC power provided from socket 16 to DC power for charging high-voltage battery B is provided between socket 16 and high-voltage battery B.

Vehicle 1 further includes an in-vehicle electric load receiving electric power from high-voltage battery B or an auxiliary machinery battery 57 and controlled by control device 30. The in-vehicle electric load includes motor-generators MG1, MG2, inverters 14, 14A provided corresponding to these motor-generators respectively, and boost unit 20 boosting the voltage of battery B and supplying the boosted voltage to inverters 14, 14A.

The in-vehicle electric load further includes a cooling and heating load 52 (an air-conditioning apparatus, a seat heater, a defogger, and the like) and a DC/DC converter 50 provided corresponding thereto.

Vehicle 1 further includes auxiliary machinery battery 57. Auxiliary machinery battery 57 is a power supply separate from externally charged high-voltage battery B. The in-vehicle electric load may be a load for engine warm-up 56 receiving electric power supply from auxiliary machinery battery 57 (such as a catalyst heater, a fuel highpressure pump, and the like). Vehicle 1 further includes a DC/DC converter 54 charging auxiliary machinery battery 57 and supplying electric power also to load for engine warm-up 56. For example, a 288V nickel metal hydride battery or lithium ion battery may be used as high-voltage battery B, and a 12V lead-acid battery, or a 42V lead-acid battery or lithium ion battery may be used as auxiliary machinery battery 57. In addition, the invention of the subject application is applicable to an example incorporating both 12V and 42V auxiliary machinery batteries.

System main relays SR1, SR2 are provided on a power supply path connecting high-voltage battery B and boost unit 20 to each other, and ON/OFF of the same is controlled by control device 30. System main relays SR11, SR12 are provided on a power supply path connecting high-voltage battery B and DC/DC converter 50 to each other, and ON/OFF of the same is controlled by control device 30. System main relays SR21, SR22 are provided on a power supply path connecting high-voltage battery B and DC/DC converter 54 to each other, and ON/OFF of the same is controlled by control device 30.

Hybrid vehicle 1 further includes a system start-up switch 58, a door opening/closing sensor 8, a temperature sensor 46, and a humidity sensor 48. Control device 30 renders system main relays SR1, SR2, SR11, SR12, SR21, SR22 conductive when system start-up switch 58 is operated and a start signal IG is activated.

In addition, when removal of plug 104 shown in Fig. 1 from socket 16 is sensed by coupling confirmation sensor 18, control device 30 renders system main relays SR11, SR12, SR21, SR22 conductive as necessary, taking into consideration the state of door opening/closing sensor 8, temperature sensor 46, humidity sensor 48, and the like, and starts a preparation operation for operating the vehicle. The preparation operation includes an operation of cooling and heating load 52 making the vehicle room comfortable or actuation of load for engine warm-up 56 for improving fuel efficiency. During the preparation operation, as the power of a portion unnecessary for preparation is desirably turned off, system main relays SR1, SR2 are controlled to attain a non-connected state.

Preferably, hybrid vehicle 1 includes a preliminary drive designation switch 44 and a preliminary drive indicator 42. Preliminary drive designation switch 44 is provided around socket 16 for providing an instruction to prohibit drive of a vehicle load in response to disconnection of the charging cable. Here, only when preliminary drive is designated by means of preliminary drive designation switch 44, control device 30 allows operation of cooling and heating load 52 or load for engine warm-up 56 in response to sensing of removal of the plug.

Here, control device 30 notifies the driver of the fact that preliminary drive is being carried out via preliminary drive indicator 42. Preliminary drive indicator 42 is provided around socket 16 and indicates drive of the vehicle load in response to disconnection of the charging cable. Means other than the indicator may be used for notifying the driver that preliminary drive is being carried out.

It is noted that preliminary drive indicator 42 and preliminary drive designation switch 44 are optional and may not be provided.

Control in the present embodiment will be described in summary. Vehicle 1 includes high-voltage battery B, socket 16 for connection of the charging cable of the external power supply apparatus for charging high-voltage battery B, and cooling and heating load 52 and load for engine warm-up 56 that serve as in-vehicle electric loads receiving electric power from high-voltage battery B and controlled by control device 30. Control device 30 drives the in-vehicle electric load in response to disconnection of the charging cable from socket 16.

When a prescribed stop condition is satisfied, control device 30 stops the in-vehicle electric load that has been driven. The prescribed stop conditions are, for example, a condition that the charging cable is connected again to socket 16 after the in-vehicle electric load was driven, a condition that a prescribed time has elapsed since the in-vehicle electric load was driven, a condition that the vehicle has attained a target state as a result of actuation of the in-vehicle electric load after the in-vehicle electric load was driven, and the like. If the in-vehicle electric load is implemented by an air-conditioning apparatus, the target state of the vehicle is that the air-conditioning apparatus has been actuated and a temperature in the vehicle room is in a prescribed temperature range.

In addition, control device 30 prohibits drive of the in-vehicle electric load in response to the fact that a prescribed prohibition condition is satisfied. The prescribed prohibition condition includes, for example, a condition that preliminary drive designation switch 44 has provided an input to designate prohibition of preliminary drive of the in-vehicle electric load, a condition that a charged state SOC of high-voltage battery B is lower than a prescribed value, a condition that abnormality has been detected in a result of failure diagnosis, and the like.

If the user does not get into the vehicle for some time after disconnection of the charging cable from the vehicle, the user can prevent actuation of preliminary air-conditioning or the like by changing the setting of preliminary drive designation switch 44.

If the air-conditioning apparatus is actuated without starting the engine where charged state SOC of high-voltage battery B is lower than the prescribed value, charged state SOC of high-voltage battery B may become lower than a control lower limit. Therefore, control device 30 prohibits preliminary drive of the in-vehicle electric load.

In addition, control device 30 performs failure diagnosis as to whether there is abnormality or the like in the system main relay at the time of start-up, shut-down or the like of the system. Here, if abnormality is detected in the result of failure diagnosis, it is not preferred to start a function of the vehicle even though the function is the preliminary drive. Therefore, control device 30 prohibits preliminary drive of the in-vehicle electric load.

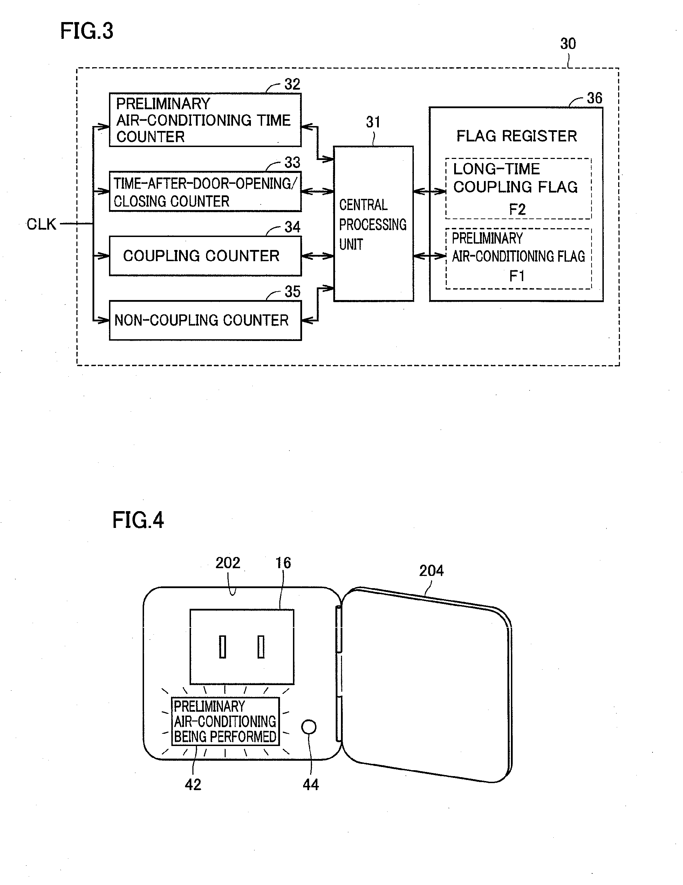

Fig. 3 is a block diagram showing a configuration of control device 30 in Figs. 1 and 2.

Referring to Fig. 3, control device 30 includes a preliminary air-conditioning time counter 32 counting time in accordance with a clock signal generated from a quartz oscillator or the like, a time-after-door-opening/closing counter 33, a coupling counter 34, and a non-coupling counter 35.

Control device 30 further includes a flag register 36 storing a long-time coupling flag F2 and a preliminary air-conditioning flag F1, and a central processing unit 31 instructing start and stop of counting and initialization of counters 32 to 35 and rewriting and reading the flag in flag register 36.

Fig. 4 illustrates an example of inside of the charge port for connection of the charging cable to the vehicle.

Referring to Fig. 4, a charge port 202 is provided with socket 16 for insertion of a plug therein when a cover 204 is opened. Preferably, preliminary drive indicator 42 and preliminary drive designation switch 44 are arranged under socket 16.

The control device in Fig. 2 allows drive of the in-vehicle electric load such as the air-conditioning apparatus in response to disconnection of the charging cable from socket 16 in the charge port, however, control device 30 may be configured to prohibit drive of the in-vehicle electric load in response to the fact that a prescribed prohibition condition is satisfied.

For example, configuration may be such that, where preliminary drive designation switch 44 has not been pressed, preliminary air-conditioning is not performed even when the plug is disconnected from socket 16. Alternatively, in order to call attention of the driver, preliminary drive indicator 42 may be turned on during preliminary air-conditioning.

In contrast, preliminary air-conditioning may be prohibited even when preliminary drive designation switch 44 is pressed and the plug is disconnected from socket 16.

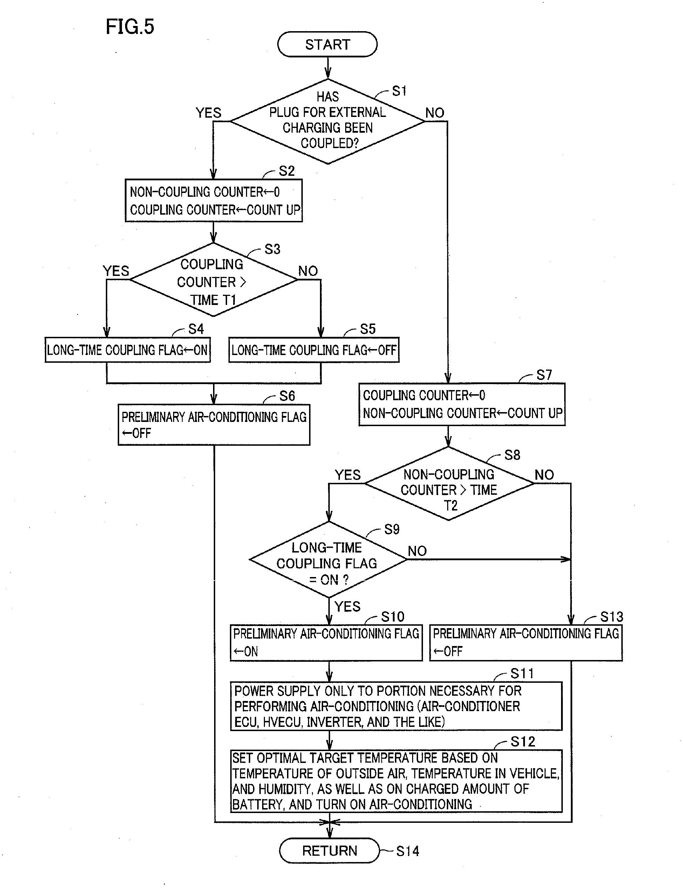

Fig. 5 is a flowchart for illustrating control of start of actuation of air-conditioning by control device 30.

Referring to Fig. 5, initially, when the process is started, in step S1, control device 30 determines whether the plug for external charging has been coupled or not, by detecting an output from coupling confirmation sensor 18 in Fig. 2. When the plug for external charging is coupled to socket 16, the process proceeds to step S2. On the other hand, when the plug for external charging is not coupled to socket 16, the process proceeds to step S7.

In step S2, central processing unit 31 in control device 30 shown in Fig. 3 sets a count value of non-coupling counter 35 to 0 and counts up a count value of coupling counter 34. When the process in step S2 ends, in step S3, central processing unit 31 determines whether the count value of coupling counter 34 has exceeded a value indicating a time T1. Time T1 is a threshold value for indicating that air-conditioning was stopped due to system stop for so long a time that an effect of air-conditioning or the like is lost and charging was performed.

When the count value of coupling counter 34 exceeds a value corresponding to time T1, the process proceeds to step S4. On the other hand, when the value of coupling counter 34 does not exceed the value corresponding to time T1, the process proceeds to step S5.

In step S4, central processing unit 31 accesses flag register 36 and varies long-time coupling flag F2 from "0" (OFF) to "1" (ON). On the other hand, in step S5, central processing unit 31 accesses flag register 36 and sets long-time coupling flag F2 to "0" (OFF). The long-time coupling flag set to "1" (ON) indicates that long-time coupling has been made, and the long-time coupling flag set to "0" (OFF) indicates that long-time coupling has not been made.

When the process in step S4 or step S5 ends, the process in step S6 is successively performed. In step S6, central processing unit 31 inactivates preliminary air-conditioning flag F1 to "0" (OFF). Preliminary air-conditioning flag F1 set to "0" (OFF) indicates that preliminary air-conditioning is not performed, and preliminary air-conditioning flag F1 set to "1" (ON) indicates that preliminary air-conditioning is performed.

When the process in step S6 ends, control is moved to the main routine in step S14.

On the other hand, when the process proceeds from step S1 to step S7, central processing unit 31 clears the value of coupling counter 34 to 0. Then, central processing unit 31 counts up the count value of non-coupling counter 35. Successively, in step S8, central processing unit 31 senses the count value of non-coupling counter 35 and determines whether or not the count value has exceeded a prescribed time T2. Here, prescribed time T2 is a time sufficient to confirm that the plug has been removed from the socket for stopping charging, and it is set in order to avoid malfunction due to chattering caused by defective contact or the like when connection is established.

When the count value of non-coupling counter 35 has exceeded a value corresponding to time T2 in step S8, the process proceeds to step S9, and otherwise the process proceeds to step S 13.

In step S9, central processing unit 31 determines whether or not long-time coupling flag F2 is in the ON state, namely, set to 1. When the long-time coupling flag is not set to "1" (ON), the process proceeds to step S 13, and when it is set to "1" (ON), the process proceeds to step S10.

In step S13, the preliminary air-conditioning flag is set to "0" (OFF). When the process in step S13 ends, control is moved to the main routine in step S 14.

In step S10, central processing unit 31 sets preliminary air-conditioning flag F 1 to "1" (ON). Thus, in step S11, power is supplied only to a portion necessary for performing air-conditioning, such as an air-conditioner ECU, an ECU of a hybrid vehicle, and an inverter for the air-conditioner. In order to supply power, control device 30 renders system main relays SR11, SR12 conductive.

Then, in step S 12, control device 30 reads a temperature of outside air and a temperature in the vehicle room at that time from temperature sensor 46, reads humidity from humidity sensor 48, and reads battery charged state SOC from high-voltage battery B. Then, control device 30 sets an optimal target temperature taking into consideration these values and actuates the air-conditioning apparatus. When the process in step S12 ends, control is moved to the main routine in step S 14.

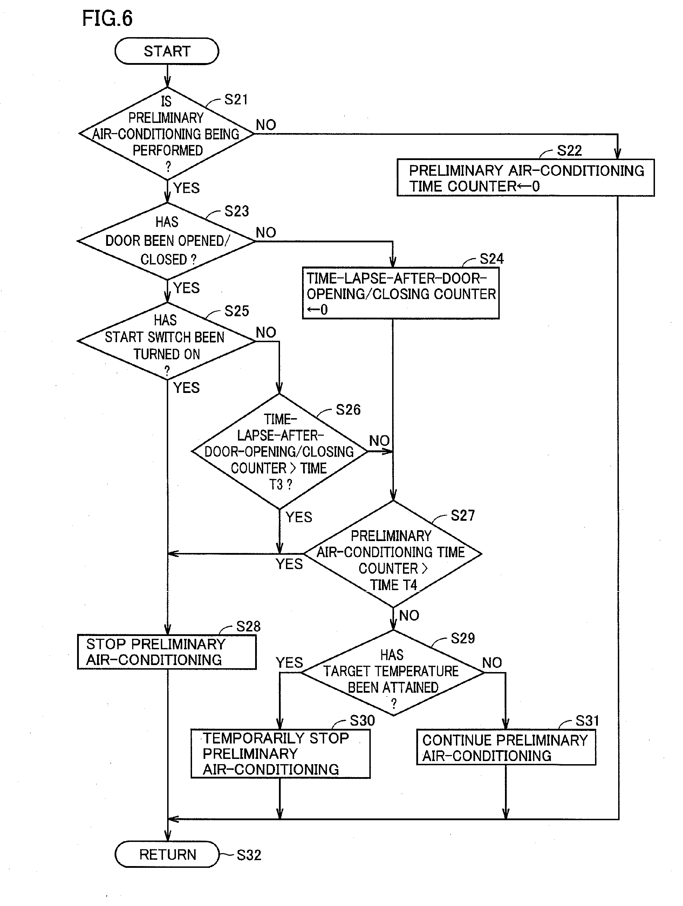

Fig. 6 is a flowchart illustrating control for stopping preliminary air-conditioning after preliminary air-conditioning was started.

Referring to Fig. 6, initially, when the process is started, in step S21, the content in preliminary air-conditioning flag F1 in Fig. 3 is read and whether or not preliminary air-conditioning is being performed is determined. When the preliminary air-conditioning flag is set to "1" (ON), preliminary air-conditioning is being performed and when the preliminary air-conditioning flag is set to "0" (OFF), preliminary air-conditioning is not currently being performed.

If it is determined in step S21 that preliminary air-conditioning is not being performed, the process proceeds to step S22 and preliminary air-conditioning time counter 32 in Fig. 3 is reset to 0. In step S32 following step S22, control is moved to the main routine.

On the other hand, if it is determined in step S21 that preliminary air-conditioning is being performed, the process proceeds to step S23. In step S23, control device 30 determines whether or not the door has been opened/closed based on an output from door opening/closing sensor 8 in Fig. 2. If the door has not been opened/closed, the count value of time-after-door-opening/closing counter 33 in Fig. 3 is reset to 0 in step S24. Then, the process proceeds from step S24 to step S27.

On the other hand, if it is determined in step S23 that the door has been opened/closed, the process proceeds to step S25. In step S25, whether or not a start switch has been pressed is determined. Control device 30 determines whether or not the start switch has been pressed based on sensing of a signal IG sent from system start-up switch 58 in Fig. 2. In the case of an electronic key such as a smart key allowing operation when presence thereof is sensed in the vehicle, the system start-up switch is implemented by a push-button type start switch in many cases.

If the start switch has not been set to the ON state in step S25, the process proceeds to step S26. In step S26, whether or not the count value of time-after-door-opening/closing counter 33 has exceeded the value corresponding to a prescribed time T3 is determined. Prescribed time T3 is set taking into consideration a case that air-conditioning is inappropriate, such as when loading of goods with the door remaining open. If the count value of time-after-door-opening/closing counter 33 has not exceeded the value corresponding to time T3, the process proceeds to step S27, and otherwise the process proceeds to step S28.

In step S27, whether or not the count value of preliminary air-conditioning time counter 32 has exceeded a value corresponding to a prescribed time T4 is determined. Prescribed time T4 is set taking into consideration a case that continuation of air-conditioning is inappropriate such as a case that a person does not get into the vehicle for a long time after the charging cable was disconnected. If the count value of preliminary air-conditioning time counter 32 has not exceeded the value corresponding to time T4, the process proceeds to step S29, and otherwise the process proceeds to step S28.

In step S28, preliminary air-conditioning flag F 1 in Fig. 3 is reset to "0" (OFF) and preliminary air-conditioning is stopped. Then, the process proceeds from step S28 to step S32 and control is moved to the main routine.

On the other hand, in step S27, if the count value of preliminary air-conditioning time counter 32 has not exceeded the value corresponding to time T4, the process proceeds to step S29. In step S29, whether or not the temperature in the vehicle room has reached the target temperature is determined. Determination of the temperature is made by control device 30 based on detection of an output from temperature sensor 46 in Fig. 2.

In step S29, if the temperature in the vehicle room has reached the target temperature, preliminary air-conditioning is temporarily stopped in step S30. On the other hand, if the temperature in the vehicle room has not reached the target temperature, preliminary air-conditioning is continued in step S31. When the process in step S30 or step S31 ends, control is moved to the main routine in step S32.

As described above, the present embodiment is applied to a vehicle that can externally be charged via a charging cable. When the coupling confirmation sensor provided in the charge socket of the vehicle senses a non-coupled state for a certain prescribed period or longer after a coupled state (being charged) lasted for a certain prescribed period, determination that the driver is estimated to get into the vehicle is made. Accordingly, if this condition is satisfied, power is supplied only to a portion necessary for performing air-conditioning such as an ECU for air-conditioner, an ECU for hybrid vehicle control, and an inverter for the air-conditioner. Then, an optimal target temperature is set based on the temperature of outside air, the temperature in the vehicle room, humidity, a charged amount of the battery, and the like at that time, and air-conditioning is actuated.

By doing so, intention to get into the vehicle of a driver or the like can be determined without manipulation by a driver or a passenger of a switch in a remote controller in advance before the time of getting into the vehicle. Therefore, burden of the driver or the like can be saved and forgetting of manipulation can be avoided. In addition, unlike a normal vehicle, as a vehicle incorporating a power storage apparatus can perform air-conditioning without turning on the engine, deterioration in exhaust emission can be prevented.

Moreover, preliminary air-conditioning control is stopped at the time point when the driver presses the start switch to instruct system start-up after sensing of door opening/closing during preliminary air-conditioning, and transition to normal air-conditioning control is made. Further, when the temperature in the vehicle reaches the target temperature before the driver or the like presses the start switch during preliminary air-conditioning, air-conditioning is stopped for a prescribed period. Here, air-conditioning is started again when a difference between the temperature in the vehicle and the target temperature is great to some extent. Alternatively, preferably, from the viewpoint of prevention of erroneous operation, if a driver or the like does not get into the vehicle, namely, if the door is not opened/closed even after lapse of a prescribed time since the start of preliminary air-conditioning, air-conditioning is completely stopped.

By carrying out control as such, useless air-conditioning is not performed and power consumption can be suppressed.

In the present embodiment, an example where an inverter dedicated for charging is provided for external charging of the power storage apparatus has been shown, however, the embodiment is not limited thereto. The invention of the subject application is applicable also to a configuration in which external electric power is received from a neutral point of a stator coil of a motor and an inverter for running is utilized for conversion of electric power during charging.

In addition, in the present embodiment, an example in which the present invention is applied to a series/parallel type hybrid system where motive power of the engine is split to an axle and a generator by means of a power split device has been shown. The present invention, however, is applicable also to a series type hybrid vehicle, in which an engine is used only for driving a generator and only a motor using electric power generated by the generator generates driving force of an axle, and to an electric vehicle running solely with a motor. Moreover, the present invention is applicable also to a hybrid vehicle incorporating only a single motor and using a transmission and a motor-generator directly coupled to an engine, that serves as auxiliary motive power during acceleration and generates electric power through regeneration during deceleration.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A control device of a vehicle, said vehicle including a power storage apparatus, a charge port for connection of a charging cable of an external power supply apparatus for charging said power storage apparatus, and an in-vehicle electric load controlled by said control device, comprising:
a drive start determination portion driving said in-vehicle electric load in response to disconnection of said charging cable from said charge port.

2. The control device of a vehicle according to claim 1, wherein
said in-vehicle electric load includes an air-conditioning apparatus, and
said control device causes said air-conditioning apparatus to perform preliminary air-conditioning before a driver gets in the vehicle in response to disconnection of said charging cable from said charge port.

3. The control device of a vehicle according to claim 1, wherein
said vehicle is a hybrid vehicle in which an internal combustion engine and a motor are used for driving wheels,
said in-vehicle electric load includes a load for warming up said internal combustion engine, and
said control device causes said load for warming-up to perform warm-up before a driver gets in the vehicle in response to disconnection of said charging cable from said charge port.

4. The control device of a vehicle according to claim 1, further comprising a stop determination portion stopping said in-vehicle electric load that has been driven when a prescribed stop condition is satisfied.

5. The control device of a vehicle according to claim 4, wherein
said prescribed stop condition includes connection again of said charging cable to said charge port after said in-vehicle electric load was driven.

6. The control device of a vehicle according to claim 4, wherein
said prescribed stop condition includes lapse of a prescribed time since said in-vehicle electric load was driven.

7. The control device of a vehicle according to claim 4, wherein
said prescribed stop condition includes a condition that the vehicle has attained a target state as a result of actuation of said in-vehicle electric load after said in-vehicle electric load was driven.

8. The control device of a vehicle according to claim 1, further comprising a prohibition determination portion prohibiting drive of said in-vehicle electric load in response to a prescribed prohibition condition being satisfied.

9. The control device of a vehicle according to claim 8, wherein
said prescribed prohibition condition includes an input to designate prohibition of preliminary drive of said in-vehicle electric load from a manipulation portion.

10. The control device of a vehicle according to claim 8, wherein
said prescribed prohibition condition includes a charged state of said power storage apparatus being lower than a prescribed value.

11. The control device of a vehicle according to claim 8, wherein
said prescribed prohibition condition includes detection of abnormality in a result of failure diagnosis.

12. The control device of a vehicle according to claim 1, further comprising a display portion provided around said charge port, for indicating drive of a vehicle load in response to disconnection of said charging cable.

13. The control device of a vehicle according to claim 1, further comprising a manipulation portion provided around said charge port, for giving an instruction to prohibit drive of a vehicle load in response to disconnection of said charging cable.

14. A vehicle comprising the control device of a vehicle according to any one of claims 1 to 13.
